# DEMANDE DE BREVET EUROPEEN

(11) **EP 1 460 498 A1**
(43) Date de publication de la demande: **22.09.2004**
(21) Numéro de dépôt: 04075862.5
(22) Date de dépôt: 17.03.2004
(51) Int. Cl.: G05B 19/05

(54) **Procédé de programmation d'un automatisme utilisant un langage graphique de schémas à contacts**

(30) Priorité: 17.03.2003 FR 0303384
(71) Demandeur: Schneider Electric Industries SAS, 92500 Rueil-Malmaison (FR)
(72) Inventeur: Bouteille, M. Noel, 75012 Paris (FR)

(57) **Abrégé**

L'invention concerne un procédé de programmation utilisant un langage graphique de schémas à contacts pour décrire tout ou partie d'un programme d'application destiné au contrôle/commande d'un process à automatiser. Le programme d'application comprend au moins un premier réseau de contacts amont (10) et un second réseau de contacts aval (30) qui sont chacun composés d'au moins une ligne (19,39) portant une combinaison de contacts agissant sur une ou plusieurs bobines et dont les extrémités sont reliées à deux colonnes de connexion (5,6). Au moins une des colonnes de connexion (5) est susceptible de comporter une zone de contacts (20), l'activation du réseau de contacts aval (30) étant subordonnée à l'activation du réseau de contacts amont (10) et à l'état de ladite zone de contacts (20).

## Description

La présente invention se rapporte à un procédé de programmation de tout ou partie d'un programme d'application d'automatisme destiné à être exécuté par un équipement d'automatisme, tel qu'un automate programmable ou un contrôleur programmable, de façon à assurer le contrôle/commande de tout ou partie d'un process à automatiser. Ce procédé de programmation utilise un langage graphique de type schémas à contacts. Il a pour objectif d'adjoindre des capacités de traitement séquentiel à un programme d'application utilisant un langage graphique de type schémas à contacts. L'invention se rapporte également à un équipement d'automatisme capable d'exécuter un tel programme d'application.

Le programme d'application d'automatisme, appelé encore programme utilisateur, est exécuté dans un équipement d'automatisme pour faire du contrôle et/ou de la commande d'un process à automatiser, au moyen notamment d'entrées/sorties qui sont reliées au process et qui peuvent être lues/écrites par ce programme d'application. Le programme d'application est élaboré par un concepteur et est souvent écrit en utilisant un ou plusieurs langages d'automatisme. La norme IEC61131-3 définit certains langages graphiques d'automatisme, comme un langage de schémas à contacts (Ladder Diagram ou langage LADDER), un langage de diagrammes fonctionnels en séquence (SFC ou Sequential Function Chart, tel que le langage GRAFCET), un langage de blocs fonctions (FBD ou Function Block Description) ainsi que des langages textuels d'automatisme de type IL (Instruction List) ou ST (Structured Text). Les langages graphiques présentent entre autre l'avantage de faciliter la programmation par un concepteur automaticien sans nécessiter l'emploi de langages informatiques.

Un équipement d'automatisme désigne ci-après un automate programmable, un contrôleur logique programmable, une station de contrôle/commande, une commande numérique ou tout équipement pouvant mémoriser et exécuter un programme d'application pour effectuer le contrôle/commande de tout ou partie d'un process à automatiser. Ce process appartient par exemple au domaine des automatismes industriels, des automatismes du bâtiment ou du contrôle/commande des réseaux électriques de distribution. Habituellement, un tel équipement d'automatisme comporte une unité centrale reliée à un ou plusieurs coupleurs d'entrées-sorties connectés à des capteurs et à des préactionneurs du process à commander.

Un langage graphique de schémas à contacts, tel que le langage LADDER, présente la particularité d'utiliser un graphisme qui s'inspire des schémas électriques conventionnels ce qui le rend familier et facilement compréhensible pour des professionnels de l'électricité, par exemple. Il se compose généralement d'une suite de réseaux de contacts disposés les uns à la suite les autres entre deux colonnes de connexion. Chaque réseau de contacts peut comporter une ou plusieurs lignes de contacts dont les deux extrémités sont reliées aux deux colonnes de connexion continues. Une ligne de contacts porte une ou plusieurs bobines et une combinaison booléenne d'un ou plusieurs contacts (par exemple de type contacts à fermeture, à ouverture, contacts sur front, blocs de comparaison ou autres) de telle sorte que le résultat combinatoire de la combinaison de contacts (contacts en série et/ou en parallèle) soit la condition d'une action sur la ou les bobines. Les colonnes de connexion symbolisent une arrivée et un départ du courant électrique alimentant chaque ligne de contacts, par analogie avec un schéma électrique conventionnel.

Un tel langage graphique de schémas à contacts présente l'avantage de permettre l'écriture d'un programme d'application de façon simple et intuitive pour un concepteur connaissant les schémas électriques, mais aussi de permettre la visualisation en temps réel du programme d'application lors de son exécution dans un équipement d'automatisme, en simulant le passage d'un courant électrique fictif dans les réseaux de contacts, ce qui facilite sa mise au point.

Néanmoins, un langage de schémas à contacts n'est capable de traiter à lui seul que des équations combinatoires. Il ne peut donc pas intégrer directement des fonctions séquentielles même simples que l'on rencontre très souvent, notamment dans les automatismes de machines. Pour cela, une des solutions connues consiste à concevoir le programme d'application en utilisant un langage supplémentaire de type SFC, tel que le langage GRAFCET. Un langage SFC permet de traiter efficacement les fonctions séquentielles du programme d'application, les fonctions combinatoires et logiques restant traitées à l'aide du langage à contacts. Mais cette solution, satisfaisante pour des applications complexes, s'avère parfois lourde et onéreuse pour des applications plus simples puisqu'elle nécessite l'utilisation de deux langages complémentaires pour réaliser le programme d'application et donc la connaissance par le concepteur de ces deux langages. Elle nécessite également la possibilité de visualiser les deux représentations graphiques différentes de ces langages sur un terminal de programmation et/ou de visualisation.

Pour des applications d'automatisme simples, une autre solution connue consiste à intégrer, dans un programme d'application écrit en langage de schémas à contacts, des informations relais intermédiaires (appelées aussi mémoires intermédiaires), qui se présentent sous forme de contacts et bobines. La bobine d'une de ces informations relais est, par exemple, activée dans un premier réseau de contacts puis un contact correspondant à cette bobine intermédiaire est inséré dans un second réseau de contacts, ce qui rend l'activation de ce second réseau de contacts dépendante du premier réseau de contacts. On arrive ainsi à recréer une chronologie et une séquence entre différents réseaux de contacts. Cependant, cette solution peu élégante, s'avère rapidement lourde à l'emploi et elle est surtout plus difficile à lire pour des spécialistes de schémas électriques, ce qui diminue l'avantage que constitue l'utilisation d'un langage graphique à contacts.

Il serait donc souhaitable de pouvoir utiliser un langage graphique pratique et intuitif pour des concepteurs déjà familiers avec les schémas électriques, capable de traiter des fonctions combinatoires mais capable de traiter également des fonctions de séquences permettant de décrire un fonctionnement séquentiel d'applications d'automatismes relativement simples. Ces concepteurs pourraient ainsi, à l'aide d'un seul langage graphique, concevoir et mettre au point des programmes d'applications simples contenant des fonctions combinatoires et séquentielles.

Pour cela, l'invention décrit un procédé de programmation utilisant un langage graphique de schémas à contacts pour décrire tout ou partie d'un programme d'application destiné au contrôle/commande d'un process à automatiser. Le programme d'application comprend au moins un premier réseau de contacts amont et un second réseau de contacts aval qui sont chacun composés d'au moins une ligne portant une combinaison de contacts agissant sur une ou plusieurs bobines et dont les extrémités sont reliées à deux colonnes de connexion. Au moins une des colonnes de connexion est susceptible de comporter une zone de contacts booléenne entre les deux réseaux de contacts, l'activation du réseau de contacts aval étant subordonnée à l'activation du réseau de contacts amont et à l'état de ladite zone de contacts.

Selon une caractéristique, l'activation du réseau de contacts aval survient lorsque le réseau de contacts amont est activé et que ladite zone de contacts est dans un état vrai. Selon une autre caractéristique, chaque colonne de connexion est susceptible de comporter une zone de contacts entre un réseau de contacts amont et un réseau de contacts aval.

L'invention décrit également un équipement d'automatisme comportant une unité de traitement qui est capable d'exécuter un programme d'application conçu selon le procédé de programmation de l'invention.

D'autres caractéristiques et avantages vont apparaître dans la description détaillée qui suit en se référant à un mode de réalisation donné à titre d'exemple et représenté par les dessins annexés sur lesquels :
- la figure 1 schématise un exemple de programmation de deux réseaux de contacts selon l'art antérieur,
- la figure 2 schématise le même premier exemple de programmation, conforme à l'invention,
- la figure 3 représente un second exemple de deux réseaux de contacts selon l'invention.

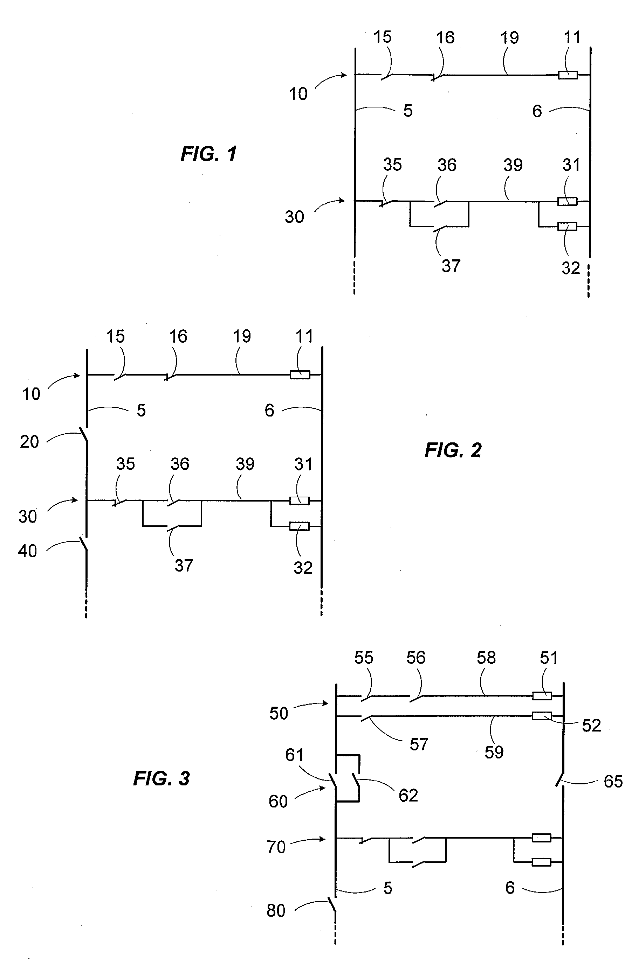

En référence à la figure 1, une partie d'un programme d'application d'automatisme est élaborée à l'aide d'un langage graphique de schémas à contacts classique. Cette partie de programme comporte deux réseaux de contacts : un premier réseau de contacts amont 10 et un second réseau de contacts aval 30.

Le réseau de contacts amont 10 se compose d'une seule ligne 19 comportant un contact à fermeture 15 en série avec un contact à ouverture 16, alimentant une bobine 11. La ligne 19 est reliée à chacune de ses extrémités à deux colonnes de connexion, respectivement 5 et 6. Le réseau de contacts aval 30 comprend également une seule ligne 39 avec un contact à ouverture 35 relié en série à deux contacts à fermeture 36 et 37 en parallèle pour alimenter deux bobines 31 et 32 en parallèle. La ligne 39 est reliée à chacune de ses extrémités aux deux colonnes de connexion 5 et 6. Dans un schéma à contacts classique, tel qu'en figure 1, les colonnes de connexion 5 et 6 sont continues. Par convention, les bobines des lignes sont habituellement schématisées sur la partie droite des lignes, proche de la colonne de connexion de droite 6 et les contacts sur la partie gauche, proche de la colonne de connexion de gauche 5.

Un équipement d'automatisme comporte une unité de traitement qui est chargée d'exécuter un tel programme écrit en langage de schémas à contacts. L'unité de traitement effectue de façon connue les opérations suivantes à chaque cycle de scrutation du programme :
- Analyse du réseau de contacts amont 10 : lecture de l'état du contact 15 et du contact 16 (qui correspondent par exemple à des informations d'entrée et/ou à des informations mémorisées dans l'équipement d'automatisme), puis écriture de la bobine 11 (correspondant par exemple à une information de sortie et/ou une information mémorisée dans l'équipement d'automatisme). En l'occurrence, la bobine 11 sera mise à l'état 1 (ou vrai) uniquement si le contact à fermeture 15 est à l'état 1 et si le contact à ouverture 16 est à l'état 0 (ou faux).
- Analyse du réseau de contacts aval 30 : lecture de l'état des contacts 35,36,37, puis écriture des bobines 31,32. En l'occurrence, les bobines 31,32 seront mises à l'état 1 uniquement si le contact à ouverture 35 est à l'état 0 et au moins l'un des contacts à fermeture 36,37 est à l'état 1.
- Analyse des éventuels autres réseaux de contacts du programme d'application.

Le langage de schémas à contacts ne comprenant pas de partie séquentielle, chaque réseau de contacts est en permanence activé et donc systématiquement scruté à chaque cycle de l'unité de traitement. Si le programme est important, cela peut donc entraîner une surcharge de travail pour l'unité de traitement, surtout si elle dispose d'une puissance limitée. De plus, un process à automatiser inclut fréquemment un fonctionnement séquentiel, ce qui signifie que la scrutation d'une partie du programme d'application effectuant le contrôle/commande de ce process, ne doit être réalisé que dans certaines circonstances ou suivant certaines conditions.

L'invention propose donc un procédé de programmation basé sur l'utilisation d'un langage graphique de schémas à contacts, mais dans lequel les réseaux de contacts ne seront pas tous systématiquement activés, de façon à se rapprocher d'une scrutation séquentielle du programme d'application plus proche du fonctionnement réel du process à automatiser et de façon à alléger le travail de l'unité de traitement. En allégeant le temps de scrutation ou d'exécution du programme d'application, on peut notamment diminuer avantageusement le temps de réponse de l'équipement d'automatisme.

Pour cela, au moins une des colonnes de connexion 5,6 est susceptible de comporter une zone de contacts booléenne entre deux réseaux de contacts. L'exemple de la figure 2 reprend les mêmes réseaux de contacts 10,30 de la figure 1 avec, en plus, une zone de contacts booléenne 20 placée sur la colonne de connexion 5 entre les réseaux 10 et 30 et une zone de contacts booléenne 40 placée après le réseau de contacts aval 30.

Le rôle d'une zone de contacts booléenne située entre deux réseaux de contacts est de conditionner l'activation du réseau de contact situé en aval à l'état de cette zone de contact ainsi qu'à l'activation du réseau de contact situé en amont.

Ainsi, dans un premier mode de réalisation présenté à la figure 2, si on suppose le réseau de contacts amont 10 activé à un instant donné, l'unité de traitement de l'équipement d'automatisme scrute ce réseau amont 10 ainsi que la zone de contacts 20, mais ne scrute pas le réseau aval 30 qui est désactivé. Le réseau 10 reste activé et scruté tant que la zone de contact 20 est à l'état 0 (ou faux). Lorsque la zone de contact 20 passera à l'état 1 (ou vrai), alors le réseau de contacts aval 30 sera activé et le réseau de contacts amont 10 sera désactivé. A partir de ce moment, l'unité de traitement ne scrutera que le réseau aval 30 ainsi que la zone de contacts 40 située au-dessous. De la même façon, le passage à l'état 1 de la zone de contacts 40 provoquera la désactivation du réseau aval 30 et l'activation d'un éventuel troisième réseau de contacts situé en aval de la zone de contacts 40.

Il est clair que la présence d'une zone de contacts entre deux réseaux de contacts reste facultative. Ainsi, si aucune zone de contacts n'est programmée entre plusieurs réseaux de contacts, ceux-ci seront scrutés en même temps par l'unité de traitement et leur activation / désactivation seront également simultanées.

Une zone de contacts booléenne peut indifféremment être composée d'un seul contact ou d'une combinaison de contacts. Dans la figure 2, les zones de contacts 20 et 40 ne comprennent qu'un contact à fermeture, alors que dans la figure 3, la zone de contacts 60 comprend deux contacts à fermeture 61,62 en parallèle. Dans le cas d'une combinaison de contacts, l'état de la zone de contact est déterminé par le résultat combinatoire de cette zone de contact. Donc, l'état de la zone de contacts 60 sera égal à 1 (ou vrai) si au moins un des contacts 61,62 est à l'état 1.

Dans ce premier mode de réalisation, l'avancement de l'activation se fait de l'amont vers l'aval et les zones de contacts 20,40 sont placées par exemple sur la colonne de connexion 5 de gauche, c'est-à-dire sur la colonne de connexion placée au plus près des contacts de lignes.

La figure 3 montre un deuxième mode de réalisation dans lequel des zones de contacts peuvent être placées sur la colonne de connexion 5 ainsi que sur la colonne de connexion 6. La colonne de gauche 5 comporte une zone de contacts 60 placée entre le réseau de contacts amont 50 et le réseau de contacts aval 70 et une zone de contacts 80 placée après le réseau de contacts aval 70. La colonne de droite 6 comporte une zone de contacts 65 placée entre le réseau de contacts aval 70 et le réseau de contacts amont 50.

Le rôle d'une zone de contacts booléenne située sur une première colonne de connexion (par exemple la colonne de gauche) entre deux réseaux de contacts est de conditionner l'activation du réseau de contact situé en aval à l'état de cette zone de contact ainsi qu'à l'activation du réseau de contact situé en amont, comme indiqué précédemment. Inversement, le rôle d'une zone de contacts booléenne située sur la seconde colonne de connexion (par exemple la colonne de droite) entre deux réseaux de contacts est de conditionner l'activation du réseau de contact situé en amont à l'état de cette zone de contact ainsi qu'à l'activation du réseau de contact situé en aval. Ainsi, dans la figure 3, le fonctionnement est le suivant :
- A l'instant T1, on suppose le réseau de contacts amont 50 activé. Ce réseau 50 est composé de deux lignes indépendantes 58,59 qui sont donc toutes les deux exécutées tant que le réseau 50 est activé. Les bobines 51,52 sont écrites en fonction de l'état des contacts 55,56,57.
- A l'instant T2, l'état de la zone de contacts 60 devient vrai. Le réseau de contacts amont 50 est alors désactivé et le réseau de contacts aval 70 est activé.
- A partir de cet instant T2, seul le réseau de contacts aval 70 est activé. Il reste activé tant que la zone de contacts 65 et la zone de contacts 80 sont dans un état faux.
   - Si l'état de la zone de contacts 65 située sur la colonne de connexion 6 est vrai (en l'occurrence si le contact 65 est fermé), alors l'opération inverse se produit : le réseau de contacts amont 50 est réactivé et le réseau de contacts aval 70 est désactivé. On revient dans ce cas au fonctionnement de l'instant T1.
   - Par contre, si l'état de la zone de contacts 80 est vrai (contact 80 fermé), alors le déroulement du programme se poursuit comme dans le cas de la figure 2, à savoir le réseau de contacts aval 70 est désactivé et un troisième réseau de contacts situé après la zone 80 est activé. Il faut convenir d'une priorité de fonctionnement au cas où les zones de contacts 65 et 80 seraient à l'état vrai en même temps.

Les exemples représentés dans les figures ne comportent qu'un graphe ou circuit de programme matérialisé par les deux colonnes de connexion 5,6. Il est évident qu'un programme d'application peut comporter plusieurs circuits à partir d'autres paires de colonnes de connexion distinctes. Dans ce cas, les différents circuits du programme d'application sont scrutés en parallèle par l'unité de traitement. Par ailleurs, pour pouvoir démarrer la scrutation du programme, il est nécessaire d'activer de façon inconditionnelle le premier réseau de contacts du programme d'application ou le premier réseau de contacts de chaque circuit du programme d'application. De même, on peut prévoir par convention que la désactivation du dernier réseau de contacts d'un circuit réactive le premier réseau de contacts de ce circuit.

Enfin, les exemples représentés dans les figures ne comportent que des exemples simples de contacts (à fermeture ou ouverture) et de bobines (directe). Là encore, il est évident que l'invention peut être utilisée avec les éléments combinatoires plus complexes fréquemment admis dans des langages graphiques de schémas à contacts, du type fronts montants, fronts descendants, blocs comparaisons, blocs fonctions, etc.

Il est bien entendu que l'on peut, sans sortir du cadre de l'invention, imaginer d'autres variantes et perfectionnements de détail et de même envisager l'emploi de moyens équivalents.

## Revendications

1. Procédé de programmation utilisant un langage graphique de schémas à contacts pour décrire tout ou partie d'un programme d'application destiné au contrôle/commande d'un process à automatiser, le programme d'application comprenant au moins un premier réseau de contacts amont (10) et un second réseau de contacts aval (30) qui sont chacun composés d'au moins une ligne (19,39) portant une combinaison de contacts (15,16,35,36,37) agissant sur une ou plusieurs bobines (11,31,32) et dont les extrémités sont reliées à deux colonnes de connexion (5,6), **caractérisé en ce qu'**au moins une des colonnes de connexion (5) est susceptible de comporter une zone de contacts (20) entre les deux réseaux de contacts (10,30), l'activation du réseau de contacts aval (30) étant subordonnée à l'activation du réseau de contacts amont (10) et à l'état de ladite zone de contacts (20).

2. Procédé de programmation selon la revendication 1, **caractérisé en ce que** la zone de contacts (60) est constituée d'une combinaison de contacts (61,62) dont le résultat combinatoire détermine l'état de ladite zone de contacts (60).

3. Procédé de programmation selon la revendication 2, **caractérisé en ce que** l'activation du réseau de contacts aval (30) survient lorsque le réseau de contacts amont (10) est activé et que la zone de contacts (20) est dans un état vrai.

4. Procédé de programmation selon la revendication 3, **caractérisé en ce que** l'activation du réseau de contacts aval (30) provoque la désactivation du réseau de contacts amont (10).

5. Procédé de programmation selon la revendication 1, **caractérisé en ce que** la zone de contacts (20) est positionnée sur une première colonne de connexion (5) située au plus près des contacts (15,16,35,36,37) des lignes de contacts (19,39).

6. Procédé de programmation selon la revendication 1, **caractérisé en ce que** le premier réseau de contacts du programme d'application est activé de façon inconditionnelle.

7. Procédé de programmation selon l'une des revendications précédentes, **caractérisé en ce que** chaque colonne de connexion (5,6) est susceptible de comporter une zone de contacts (60,65) entre un réseau de contacts amont (50) et un réseau de contacts aval (70).

8. Procédé de programmation selon la revendication 7, **caractérisé en ce que** l'activation du réseau de contacts aval (70) survient lorsque le réseau de contacts amont (50) est activé et que la zone de contacts (60) placée sur une première colonne (5) est dans un état vrai, et l'activation du réseau de contacts amont (50) survient lorsque le réseau de contacts aval (70) est activé et que la zone de contacts (65) placée sur une seconde colonne (6) est dans un état vrai.

9. Equipement d'automatisme **caractérisé en ce qu'**il comporte une unité de traitement capable d'exécuter un programme d'application conçu selon le procédé de programmation de l'une des revendications précédentes.
